# EUROPÄISCHE PATENTSCHRIFT

(11) **EP 1 737 633 B1**
(45) Veröffentlichungstag und Bekanntmachung des Hinweises auf die Patenterteilung: **25.07.2012**
(21) Anmeldenummer: 05732347.9
(22) Anmeldetag: 29.03.2005
(51) Int. Cl.: B29B 15/12, B29B 15/10, C08J 5/04, D06M 15/55

(54) **DURCH EPOXIDHARZ IMPRÄGNIERTES GARN UND SEINE VERWENDUNG ZUR HERSTELLUNG EINES VORFORMLINGS**
EPOXY RESIN IMPREGNATED YARN AND THE USE THEREOF FOR PRODUCING A PREFORM
FILE IMPREGNE D'UNE RESINE EPOXY ET SON UTILISATION POUR LA PRODUCTION D'UNE PREFORME

(30) Priorität: 31.03.2004 EP 04007749
(43) Veröffentlichungstag der Anmeldung: 03.01.2007
(73) Patentinhaber: Toho Tenax Europe GmbH, 42103 Wuppertal (DE)
(72) Erfinder: SCHNEIDER, Markus, 40237 Düsseldorf (DE); WOHLMANN, Bernd, 40267 Düsseldorf (DE)
(74) Vertreter: Schröder, Richard
(86) Internationale Anmeldenummer: PCT/EP2005/003281
(87) Internationale Veröffentlichungsnummer: WO 2005/095080

(56) Entgegenhaltungen:
- WO-A-98/30374
- DE-A1- 19 933 741
- US-B1- 6 228 474

## Beschreibung

Die vorliegende Erfindung betrifft ein Garn, die Verwendung des Garns zur Herstellung eines Vorformlings, einen das Garn umfassenden Vorformling, ein Verfahren zur Herstellung des Vorformlings und dessen Verwendung zur Herstellung eines Composites.

Zur Herstellung von Bauteilen aus faserverstärkten Kunststoffen ist es bekannt, zuerst einen Vorformling anzufertigen, der dem Bauteil in seiner Form ähnlich ist, anschließend den Vorformling in ein Werkzeug zu überführen, das der Form des Bauteils entspricht und schließlich unter Zugabe eines Matrixharzes das gewünschte Bauteil herzustellen.

Im Gegensatz zu Vorformlingen weisen sog. Prepregs (englische Abkürzung für pre-impregnated fibers) bereits beide Komponenten (Faser und Matrixharz) im endgültigen Mischungsverhältnis auf und sind daher bereits als Halbfertigprodukt biegesteif. Um vorzeitige, ungewollte Reaktionen zu verhindern, muss dieses Material zudem gekühlt gelagert werden und verfügt dennoch nur über eine begrenzte Lagerzeit. Aufgrund der Biegesteifigkeit und der Herstellung als breite Rollenware sind die Anwendungsfälle von Prepregs auf großflächige und nahzu ebene Bauteile beschränkt. Das bereits vorhandene Matrixharz erlaubt keine textile Verarbeitung und keine faltenfreie Ablage der Prepregs beispielsweise entlang von engen Radien oder auf stark konturierten Geometrien.

Werden zur Herstellung von Vorformlingen biegeweiche Garne verwendet, können sehr viel gekrümmtere Oberflächen erzeugt werden. Darüber hinaus ist die maximale Lagerzeit des Vorformlings deutlich verbessert im Vergleich zu Prepregs, da das Matrixharz erst bei der Herstellung des Verbundwerkstoffs hinzugefügt wird.

JP 2003 003376 A beschreibt ein Kohlenstofffaserbündel zur Herstellung eines Prepregs. Das Bündel umfasst 20000 bis 100000 Filamente und wird durch ein Schlichtmittel zusammengehalten, das Polyoxyalkylengruppen und Epoxidgruppen enthält. Das Kohlenstofffaserbündel weist bezogen auf sein Gesamtgewicht 0,5 bis 3 Gew.-% Schlichtmittel auf.

DE 27 46 640 A beschreibt ein Material, das mit Kohlenstofffasern verstärkt ist, auf die eine Harzmischung aufgetragen ist, die ein Epoxidharz, ein Kondensationsprodukt einer Säurekomponente mit einer Hydroxylkomponente und ein Oxyalkylen-Derivat eines Phenols enthält. Die Kohlenstofffasern weisen bezogen auf ihr Gesamtgewicht 0,01 bis 10 Gew.-% Harzmischung auf.

DE 39 42 858 A beschreibt ein Schlichtmittel für Kohlenstofffasern enthaltend ein Epoxidharz und einen nichtionischen Emulgator, der tertiäre Aminogruppen, mindestens einen mit dem Epoxidharz umsetzungsfähigen funktionellen Rest und mindestens einen emulgierend wirkenden Rest enthält. Auf der Faser sollen sich 0,3 bis 10 Gew.-% des Schlichtmittels befinden.

DE 20 33 626 A beschreibt ein Verfahren zur Herstellung eines Prepregs aus mechanisch hochwertigen Fasermaterialien, wie insbesondere Glas,- Bor,- und Kohlenstofffasern. Die Fasern werden mit einer Lösung imprägniert, die ein noch freie Glycidylgruppen enthaltendes, härtbares Polyaddukt aus Triglycidylisocyanurat, ein Härtungsmittel und ein organisches Lösungsmittel enthält.

DE 201 20 447 U1 beschreibt einen Vorformling aus einem textilen Flächengebilde, z.B. aus einem Gewebe oder aus einer Fasergelegeschicht, mit einem auf der Oberfläche des textilen Flächengebildes haftenden thermoplastischen, nicht vernetzten Binder, der z.B. ein Epoxid sein kann. Gemäß DE 201 20 447 U1 wird der Binder z.B. durch Aufsprühen einer Binderlösung auf die Oberfläche des textilen Flächengebildes aufgebracht, wobei die Binderlösung Pulverpartikel enthält, welche in einem Lösungsmittel gleichmäßig dispergiert sind, und wobei die Pulverpartikel ausschließlich aus Epoxidharz bestehen können.

Jedoch ist, wenn man bei der Herstellung eines Vorformlings von einem textilen Flächengebilde ausgeht, die Beschichtung mit dem Binder ungleichmäßig über die Dicke des textilen Flächengebildes verteilt und insbesondere dort, wo sich die Garne berühren, praktisch gar nicht vorhanden. Dadurch weist ein solcher Vorformling oftmals eine geringe Schiebefestigkeit auf, wodurch das weitere Handling des Vorformlings erschwert oder sogar unmöglich gemacht wird.

Zusätzliche Nachteile ergeben sich, wenn der Vorformling Durchbrüche aufweisen soll, die, wenn man den Vorformling ausgehend von textilen Flächengebilden herstellt, in vielen Fällen durch Ausschneiden erzeugt werden müssen. Dies kostet nicht nur Arbeitszeit, sondern ist wegen des anfallenden Verschnitts auch mit einem beträchtliche Materialverlust verbunden und generiert entsprechende Abfallmengen. Somit ist dieses Verfahren zur Herstellung eines Vorformlings kosten - und arbeitsaufwendig, was sich folglich auch in den Kosten des daraus hergestellten Composites niederschlägt.

Die US-B-6228474 offenbart Garnprepregs, bestehend aus einer Vielzahl von Verstärkungsfaserfilamenten, die mit einer Mischung von schmelzbaren Epoxidharzen imprägniert werden. Die imprägnierten Garne weisen zwischen 20 und 50 Gew.-% Harz auf. Das Harzgemisch kann in einer Ausführungsform ein mono - oder bifunktionelles Epoxidharz, ein drei- oder mehrfunktionelles Epoxidharz sowie eine Kautschukkomponente und einen Härter umfassen und einen Epoxidwert zwischen ca. 2700 und ca. 4760 mmol/kg aufweisen. Mittels der Garne der US-B-6228474 werden mittels üblicher Wickelmethoden Preformen in ihrer Endkontur hergestellt, die im Anschluss an das Wickeln zum Bauteil ausgehärtet werden.

Die vorliegende Erfindung stellt sich die Aufgabe, zuvor genannte Nachteile zumindest zu verringern.

Die Aufgabe wird gelöst durch ein Garn bestehend aus Verstärkungsfaserfilamenten und einem in das Garn infiltrierten Harz, das mehrfach aufschmelzbar und durch Abkühlen auf Raumtemperatur in den festen Zustand überführbar ist, wobei die Filamente des Garns über das Harz zumindest teilweise miteinander verbunden sind, wobei das Garn bezogen auf sein Gesamtgewicht 2,5 bis 25 Gew.-% infiltriertes Harz aufweist, die Verstärkungsfaserfilamente elektrochemisch vorbehandelte Kohlenstofffilamente sind, wobei das infiltrierte Harz mindestens zwei Bisphenol A Epichlorhydrin - Harze H1 und H2 in einem Gewichtsverhältnis H1:H2 von 1,1 bis 1,4 enthält, wobei H1 einen Epoxidwert von 1850 bis 2400 mmol/kg und ein Molekulargewicht von 800 bis 1000 g/Mol aufweist und bei Raumtemperatur fest ist, und H2 einen Epoxidwert von 5000 bis 5600 mmol/kg und ein Molekulargewicht von < 700 g/Mol aufweist und bei Raumtemperatur flüssig ist, und wobei das infiltrierte Harz zusätzlich ein drittes Harz H3 enthält, welches ein Bisphenol A Epichlorhydrin - Epoxidharz mit einen Epoxidwert von 450 bis 650 mmol/kg, einem Zahlenmittel des Molekulargewichts von 2800 bis 3000 g/Mol und einem Schmelzbereich von 110 bis 130 °C ist, und wobei das Garn, bezogen auf sein Gesamtgewicht, an H1 und H2 insgesamt 0,5 bis 1,7 Gew.-% und an H3 2,3 bis 5,5 Gew.-% aufweist.

Weil die Filamente des Garns über das Harz zumindest teilweise verbunden sind, zeigt das erfindungsgemäße Garn einen sehr guten Zusammenschluß.

Bei den erfindungsgemäßen Garnen soll das Harz so ausgewählt werden, dass das damit beschichtete Garn bei Raumtemperatur nicht klebrig ist. Deshalb ist ein solches Garn dann in der Regel nicht nur aufwickelbar, sondern im aufgewickelten Zustand unter Erhalt seiner textilen Eigenschaften lagerbar und selbst nach langer Lagerzeit wieder abwickelbar. Beispielsweise läßt sich das erfindungsgemäße Garn nach 12 Monaten Lagerzeit problemlos abwickeln und zeigt höchstens unwesentlich veränderte Werte der nach DIN 65 382 gemessenen Eigenschaften Festigkeit, E-Modul und Bruchdehnung.

Schließlich läßt sich mit Hilfe des erfindungsgemäßen Garns ein Vorformling herstellen, ohne dass in aufwendiger Weise Bindermaterial noch zusätzlich hinzugefügt werden muß, wobei dennoch eine bessere Bindung zwischen den Garnen resultiert als bei einem Vorformling des Standes der Technik. Ferner fällt im Gegensatz zur Herstellung des eingangs beschriebenen Vorformlings mit Durchbrüchen aus dem Stand der Technik keinerlei Garnabfall an. Demzufolge muß kein Garnabfall beseitigt werden.

In einer bevorzugten Ausführungsform weist das erfindungsgemäße Garn bezogen auf sein Gesamtgewicht 3 bis 10 Gew.-% infiltriertes Harz auf.

In einer weiteren bevorzugten Ausführungsform sind die Verstärkungsfaserfilamente des erfindungsgemäßen Garns Kohlenstofffaserfilamente, die aus Pech-, Polyacrylnitril- oder Viskosevorprodukten gewonnen wurden, oder Aramidfilamente, Glasfilamente, Keramikfilamente, Borfilamente, Synthesefaserfilamente oder Naturfaserfilamente oder eine Kombination aus einem oder mehreren dieser Filamente. Besonders bevorzugt sind die Verstärkungsfaserfilamente Kohlenstofffaserfilamente.

Unter den Garnen aus Kohlenstofffaserfilamenten ist insbesondere ein durch elektrochemische Oxidation vorbehandeltes Garn geeignet. Dabei kann das Garn aus mehreren tausend, vorzugsweise aus etwa 3 000 bis 24 000, und insbesondere aus 3 000 bis 12 000 Filamenten bestehen.

Für das Infiltrieren des Harzes in das Garn ist im Prinzip jede Technik geeignet, welche eine schnelle und vollständige Benetzung der Verstärkungsfaserfilamente des Garns mit dem Harz unterstützt. Derartige Verfahren sind beispielsweise in EP 1 281 498 A beschrieben. Beispielsweise kann man das Garn mit einer Harz-Dispersion besprühen. Auch kann man einen Film der Harz-Dispersion auf eine glatte Walze oder in die Rillen einer Walze auftragen und das Garn über die glatte Walze bzw. durch die Rillen der Walze ziehen. Bevorzugt wird das Garn durch ein Bad geführt, welches die Harz-Dispersion enthält.

Für die vorstehend genannte Harz-Dispersion ist als Flüssigphase im Prinzip jedes Flüssigkeitsgemisch geeignet, welches mit den erfindungsgemäß eingesetzten Harzen eine stabile Dispersion bildet. Unter diesen Flüssigkeitsgemischen sind aus Emissionsschutzgründen insbesondere solche geeignet, welche wässrig sind und einen geringen VOC (Volatile Organic Content) aufweisen. Z.B. hat sich ein Gemisch aus Wasser und einem Alkohohl wie etwa 2-Propoxyethanol für das im erfindungsgemäßen Verfahren bevorzugte Bisphenol A Epichlorhydrin - Epoxidharz als vorteilhaft erwiesen.

Die Herstellung des erfindungsgemäßen Garns kann in den Herstellungsprozess des mit dem Harz zu infiltrierenden Garns nach dessen Trocknen und vor dessen Aufwickeln integriert werden, wobei das getrocknete Garn einzeln oder als Garnschar mit dem mindestens einen Harz infiltriert werden kann, wobei, falls zur Infiltrierung eine Harz-Dispersion eingesetzt wird, eine Garnspannung von 0,25 bis 1,3 cN/tex eine gute Benetzung der Verstärkungsfaserfilamente ermöglicht.

Selbstverständlich kann über die Geschwindigkeit, mit der das Garn z.B. durch ein Bad geführt wird, das die Dispersion eines oder mehrerer der zuvor beschriebenen Harze enthält, über die Eintauchlänge und über die Harzkonzentration im Bad die erfindungsgemäß erforderliche Auftragsmenge von 2,5 bis 25 Gew.-% an infiltriertem Harz bezogen auf das Gesamtgewicht des Garns erreicht werden. Dabei liegt die Geschwindigkeit, mit der das Garn durch das Bad geführt wird, bevorzugt im Bereich von 120 bis 550 m/h, besonders bevorzugt im Bereich von 150 bis 250 m/h. Die Eintauchlänge liegt vorzugsweise im Bereich von 0,2 bis 1 m. Die Harzkonzentration in der Dispersion bezogen auf deren Gewicht liegt vorzugsweise im Bereich von 2 bis 35 Gew.%, besonders bevorzugt im Bereich von 2 bis 7 Gew.-%.

Zum Trocknen des mit der vorstehend beschriebenen Harz-Dispersion beschichteten Garns hat sich eine Trocknungstemperatur im Bereich von 140 bis 330°C als besonders geeignet erwiesen.

Die erfindungsgemäßen Garne lassen sich vorteilhafterweise zur Herstellung eines Vorformlings verwenden.

Die der vorliegenden Erfindung zugrunde liegende Aufgabe wird des weiteren gelöst durch einen Vorformling, welcher die zuvor beschriebenen erfindungsgemäßen Garne umfasst, wobei die Garne an Stellen gegenseitiger Berührung über das infiltrierte Harz miteinander verbunden sind.

Obwohl aus den erfindungsgemäßen Garnen auch Gewebe hergestellt werden können, welche nach Aufschmelzen und Wiederverfestigen des infiltrierten Harzes einen in besonders hohem Maße schiebefesten Vorformling ergeben, ist es vorteilhaft, den erfindungsgemäßen Vorformling aus den erfindungsgemäßen Garnen aufzubauen, weil dabei die Garne in der Richtung positioniert werden können, in der beim Einsatz eines mit dem erfindungsgemäßen Vorformling hergestellten Composites die höchsten mechanischen Belastungen zu erwarten sind.

So sind in einer bevorzugten Ausführungsform des erfindungsgemäßen Vorformlings die Garne unidirektional angeordnet, wodurch der Vorformling zu einem Composite weiterverarbeitet werden kann, bei dessen Einsatz die maximale mechanische Belastung in eben dieser einen Richtung der Garne zu erwarten ist.

In einer weiteren bevorzugten Ausführungsform des erfindungsgemäßen Vorformlings sind die Garne bi-, tri- oder multidirektional angeordnet, wodurch der Vorformling zu einem Composite weiterverarbeitet werden kann, bei dessen Einsatz die maximale mechanische Belastung in eben diesen beiden oder mehreren Richtungen der Garne zu erwarten ist.

Zusätzlich zu den vorstehend genannten flächigen Ausführungsformen des erfindungsgemäßen Vorformlings können die uni-, bi-, tri- oder multidirektional angeordneten Garne um einen Körper gewickelt werden, der z.B. Zylinderform hat, so dass ein dreidimensionaler Vorformling resultiert.

Ferner ist eine Ausführungsform des erfindungsgemäßen Vorformlings bevorzugt, in welcher die Garne als Kurzgarne vorlieben, die in alle Raumrichtungen orientiert sein können. Damit eignet sich dieser Vorformling insbesondere zur Herstellung eines Composites, bei dessen Einsatz mechanische Belastungen in allen Raumrichtungen auftreten können.

Die der vorliegenden Erfindung zugrunde liegende Aufgabe wird ferner gelöst durch ein Verfahren zur Herstellung eines Vorformlings umfassend die Schritte
a) Vorliegen eines der erfindungsgemäßen Garne,
b) Anordnen des Garns in einer Konfiguration, welche der Konfiguration des gewünschten Vorformlings entspricht,
c) Erwärmen der in Schritt b) resultierenden Konfiguration bei einer Temperatur oberhalb des Schmelzpunktes des in das Garn infiltrierten Harzes, und
d) Abkühlen der in Schritt c) resultierenden Konfiguration zumindest unter den Schmelzpunkt des Harzes.

In einer bevorzugten Ausführungsform des erfindungsgemäßen Verfahrens wird in Schritt c) die in Schritt b) resultierende Konfiguration gleichzeitig mit dem Erwärmen verpresst.

Der erfindungsgemäße Vorformling, bzw. der nach dem erfindungsgemäßen Verfahren hergestellte Vorformling zeigt eine hohe Schiebefestigkeit, weil die Garne des erfindungsgemäßen Vorformlings über das infiltrierte Harz miteinander verbunden sind. Daher läßt sich der erfindungsgemäße Vorformling gut handhaben, was insbesondere bei seiner Weiterverarbeitung zu einem Composite vorteilhaft ist.

Wenn der erfindungsgemäße Vorformling, bzw. der nach dem erfindungsgemäßen Verfahren hergestellte Vorformling Durchbrüche aufweisen soll, können diese durch entsprechendes Anordnen der Garne und somit ohne jeglichen Schnittverlust realisiert werden. Somit entfällt das eingangs im Stand der Technik beschriebene kosten- und arbeitsaufwendige Zuschneiden. Folglich entsteht keinerlei Abfall. Dadurch wird die Herstellung eines Composites mit Durchbrüchen erleichtert und verbilligt.

Ferner kann bei der Herstellung des erfindungsgemäßen Vorformlings, bzw. des nach dem erfindungsgemäßen Verfahren hergestellten Vorformlings durch den Einsatz eines der erfindungsgemäßen Garne anstatt eines textilen Flächengebildes das Garn in der Richtung positioniert werden, in der beim Einsatz des nachfolgend hergestellten Composites die höchsten mechanischen Belastungen zu erwarten sind.

Beispielsweise werden in einer bevorzugten Ausführungsform des erfindungsgemäßen Verfahrens zur Herstellung eines Vorformlings in Schritt b) erfindungsgemäße Garne unidirektional angeordnet, so dass nach Schritt d) ein erfindungsgemäßer Vorformling resultiert, in dem die Garne unidirektional angeordnet sind.

In einer weiteren bevorzugten Ausführungsform des erfindungsgemäßen Verfahrens zur Herstellung des erfindungsgemäßen Vorformlings kann man in Schritt b) die erfindungsgemäßen Garne entweder in bi-, tri- oder multidirektionalen Lagen in eine Konfiguration legen, welche der Konfiguration des gewünschten Vorformlings entspricht. Dabei können ausschließlich erfindungsgemäße Garne verwendet werden. Ebenso kann innerhalb einer Lage von Garnen nur ein Teil aus erfindungsgemäßen Garnen bestehen und der Rest aus Garnen, deren Filamente keinerlei Harzbeschichtung aufweisen. Die in der genannten Weise konfigurierten Garne werden in Schritt c) des erfindungsgemäßen Verfahrens bei einer Temperatur oberhalb des Schmelzpunkts des Harzes, mit dem die Garne infiltriert sind, erwärmt, wobei die Garne gegebenenfalls verpresst werden. Dadurch werden die Garne klebrig. Nach Abkühlung zumindest unter den Schmelzpunkt des Harzes in Schritt d) entsteht ein erfindungsgemäßer Vorformling, in dem die Garne bi-, tri-oder multidirektional angeordnet sind.

In einer weiteren Ausführungsform des Verfahrens zur Herstellung des erfindungsgemäßen Vorformlings schneidet man die erfindungsgemäßen Garne in kurze Stücke, die z.B. eine Länge von 1 bis 1000 mm, bevorzugt von 1 bis 40 mm, haben, und platziert in Schritt a) die kurzen Gamstücke in eine Form. Danach werden in Schritt b) des erfindungsgemäßen Verfahrens die kurzen Garnstücke bei einer Temperatur oberhalb des Schmelzpunktes des Harzes, mit dem die Garne infiltriert sind, erwärmt, wodurch die Kurzgarnstücke klebrig werden, und dabei gegebenenfalls verpresst. Nach Abkühlung zumindest unter den Schmelzpunkt des Harzes in Schritt d) entsteht ein erfindungsgemäßer Vorformling, worin die erfindungsgemäßen Garne als Kurzgarne mit isotroper Ausrichtung vorliegen.

Der erfindungsgemäße Vorformling, bzw. der nach dem erfindungsgemäßen Verfahren hergestellte Vorformling, bzw. der aus der erfindungsgemäßen Verwendung resultierende Vorformling läßt sich aus den bereits genannten Gründen vorteilhaft zur Herstellung eines Composites verwenden, der eine Matrix umfasst, die ausgewählt ist aus einer der Gruppen der Polymere, Metalle, Keramiken, hydraulisch abbindenden Werkstoffe und Kohlenstoff, wobei als Polymermatrix Thermoplaste wie z.B. Polyethylenimin, Polyetherketon, Polyetheretherketon, Polyphenylensulfid, Polyethersulfon, Polyetherethersulfon, Polysulfon oder Duromere wie z.B. Epoxide, als Metallmatrix z.B. Stahl(legierungen) oder Titan, als Keramikmatrix z.B. Siliziumcarbid und Bornitrid, als hydraulisch abbindende Werkstoffe Mörtel oder Beton und als Kohlenstoffmatrix z.B. Graphit geeignet sind.

Im den aus den erfindungsgemäßen Verwendungen resultierenden Composites sind die erfindungsgemäßen Garne in der Richtung angeordnet, in der beim Einsatz der Composite die größten mechanischen Belastungen zu erwarten sind. Somit führt die erfindungsgemäße Verwendung der erfindungsgemäßen Garne und des daraus hergestellten Vorformlings zu Composites, in denen die Ausrichtung der Garne an die zu erwartenden mechanischen Belastungen maßgeschneidert angepasst ist.

### Analyseverfahren

Der Epoxidwert der erfindungsgemäß eingesetzten Epoxidharze wird gemäß der DIN 53188 vom Oktober 1975 bestimmt.

Zugfestigkeit und Zugmodul des Composites, der mit einem erfindungsgemäßen Vorformling verstärkt ist, werden nach EN 2561-B gemessen.

Die Erfindung wird anhand der folgenden Beispiele näher erläutert.

### Beispiel 1: Herstellung eines beschichteten Garns

Ein Garn aus Kohlenstofffaserfilamenten mit einem Gamtiter von 400 tex wird trocken mit einer Geschwindigkeit von 240 m/h bei einer Fadenspannung von 340 cN durch ein erstes Bad geführt, das eine Temperatur von etwa 20 °C hat. Das Bad enthält eine wässrige Dispersion, in der zwei Bisphenol A Epichlorhydrin Epoxidharze H1 und H2 enthalten sind. Das Gewichtsverhältnis von H1 zu H2 beträgt 1,2. H1 hat einen Epoxidwert von etwa 2200 mmol/kg und ein Molekulargewicht von 900 g/Mol und ist bei Raumtemperatur fest. H2 hat eine Epoxidwert von 5400 mmol/kg und ein Molekulargewicht von < 700 g/Mol und ist bei Raumtemperatur flüssig. Die Konzentration von H1 in der Dispersion beträgt 8,4 Gew.%. Die Konzentration von H2 in der Dispersion beträgt 6,9 Gew.%. Die Verweildauer des Garns in der Dispersion beträgt 12 Sekunden. Das mit H1 und H2 infiltrierte Garn wird bei von 250 bis 140 °C abfallender Temperatur getrocknet und weist nach der Trocknung bezogen auf sein Gesamtgewicht 1,2 bis 1,4 Gew.-% H1+H2 auf.

Unmittelbar anschließend wird das mit H1 und H2 infiltrierte Garn durch ein zweites Bad geführt, das eine Dispersion eines Bisphenol A Epichlorhydrin - Epoxidharzes mit einem Schmelzbereich von 120 bis 130 °C, einem Zahlenmittel des Molekulargewichts von 2870 g/Mol und mit einem Epoxidwert von 515 mmol/kg enthält. Das Dispergiermedium besteht aus einem Gemisch von 76 Gew.-% Wasser und 24 Gew.% 2-Propoxyethanol. Die Epoxidharzkonzentration im Bad beträgt 4 Gew.-%. Die Verweilzeit des Garns im zweiten Bad beträgt wenige Sekunden. Nach dem Verlassen des Bades wird das nunmehr auch mit H3 infiltrierte Garn getrocknet, indem es zuerst durch einen vertikal angeordneten Trockner mit 300 °C und anschließend durch einen horizontal angeordneten Trockner mit 330 C° geführt wird. Es resultiert ein Garn mit 4,3 Gew.% infiltriertem Harz H1+H2+H3, wobei das infiltrierte Harz einen Epoxidwert von 1300 mmol/kg aufweist.

### Beispiel 2: Herstellung eines Vorformlings

Das in Beispiel 1 beschichtete Garn wird auf eine Metallplatte, deren beide Grundflächen (Abmessungen 280 x 300 mm²) mit je einer Trennfolie belegt sind, mit einer Laborwickelanlage (Fadengeschwindigkeit 23,1 mm/s, Fadenzugkraft 400 cN) jeweils bis zum Rand der Metallplatte gewickelt. Zuerst wird auf beiden Seiten der Metallplatte eine Wickellage (Faserflächengewicht 267 g/m²) mit einer 90° Orientierung zur Wickelachse erzeugt. Dann wird die Metallplatte so um 90°gedreht, dass die bereits vorhandene Wickellage parallel zur Wickelachse liegt. Im nächsten Schritt wird mit identischen Wickelbedingungen auf die bereits vorhandene Wickellage eine weitere Wickellage mit einer 90°-Orientierung zur Wickelachse aufgebracht. Auf diese Weise resultiert auf beiden Seiten der Metallplatte jeweils ein geschichteter Aufbau mit einer 0°-Fadenlage und einer 90°-Fadenlage. Der vorstehend beschriebene Wickelvorgang wird so oft wiederholt, bis auf beiden Grundseiten der Metallplatte jeweils vier Wickellagen aufeinander liegen, die abwechselnd eine 0°- und eine 90°-Fadenlage aufweisen.

Anschließend werden die Wickellagen auf beiden Grundseiten der Metallplatte mit je einer Trennfolie belegt. Die Metallplatte wird danach komplett mit beiden jeweils vierlagigen Wicklungen und den Trennfolien in einer Presse 1 h lang bei einem Flächendruck von 2 bar und einer Temperatur von 125°C getempert.

Den resultierenden Pressling lässt man unter den Schmelzpunkt des Harzes abkühlen. Danach werden die beiden Wickelpakete an den Stirnflächen der Metallplatte auseinander geschnitten, und die vier Trennfolien entfernt. Auf diese Weise resultieren zwei formstabile Vorformlingen mit jeweils einem vierlagigen, abwechselnden 0°- und 90°-Aufbau, d.h. mit einer bidirektionalen Anordnung der Garne.

### Beispiel 3: Herstellung eines Composites

Der in Beispiel 2 hergestellte Vorformling wird auf eine Größe von 200 x 200 mm zugeschnitten und mit RTM6-Harz der Fa. Hexcel, das zuvor auf 80 °C erwärmt und in solch einer Menge aufgebracht wurde, dass ein Composite mit 60 % Faservolumenanteil entstehen kann, in üblicher Weise zu einem Composite mit einem vierlagigen, abwechselnden 0°- und 90°-Gamaufbau verarbeitet. Der Composite ist formidentisch zum eingesetzten Vorformling.

### Beispiel 4: Herstellung eines Vorformlings mit biaxialer Anordnung der Garne

Das in Beispiel 1 hergestellte Garn wird gemeinsam mit einem unter der Bezeichnung Tenax HTA 5131 400tex f6000 t0 der Firma Tenax Fibers GmbH, DE erhältlichen Standardkohlenstofffaserfilamentgarn einem biaxialen Legeprozess zugeführt, wobei jedes vierte parallel liegende Garn ein Garn aus Beispiel 1 ist.

Die biaxiale Anordnung weist folgende Konfiguration auf:
- In der ersten Lage weisen die Standardkohlenstofffaserfilamentgarne und die Garne aus Beispiel 1 einen Winkel von plus 45° zur Produktionsrichtung auf.
- In der zweiten Lage, die sich unmittelbar auf der ersten Lage befindet, weisen die Standardkohlenstofffaserfilamentgame und die Garne aus Beispiel 1 einen Winkel von minus 45 ° zur Produktionsrichtung auf.

Die resultierende Konfiguration wird durch Kontakt mit einem auf 145 °C erwärmten Heizkalander auf 125 °C 2 Minuten lang erwärmt und anschließend auf Raumtemperatur abgekühlt, wodurch ein verfestigtes textiles Flächengebilde resultiert (Vorformling im Zustand A). Ein daraus wie in Beispiel 3 hergestellter Composite mit 60 % Faservolumenanteil zeigt jeweils in Faserhauptrichtung eine Zugfestigkeit von 1100 MPa und einen Zugmodul von 70,5 GPa.

### Beispiel 5: Herstellung eines Vorformlings mit dreidimensionaler Anordnung der Garne

Der in Beispiel 4 hergestellte Vorformling im Zustand A wird mit einem sphärisch geformten Werkzeug in Halbkugelform mit einem Durchmesser von 150 mm bestehend aus Matrize und Patrize in einer Presse eine Stunde lang bei einem Flächendruck von 2 bar und einer Werkzeugtemperatur von 125 °C entsprechend der Geometrie des Werkzeugs umgeformt. Nach Abkühlen auf Raumtemperatur weist der resultierende Vorformling eine Halbkugelform auf.

## Patentansprüche

1. Garn bestehend aus Verstärkungsfaserfilamenten und einem in das Garn infiltrierten Harz, das mehrfach aufschmelzbar und durch Abkühlen auf Raumtemperatur in den festen Zustand überführbar ist, wobei die Filamente des Garns über das Harz zumindest teilweise verbunden sind, wobei das Garn bezogen auf sein Gesamtgewicht 2,5 bis 25 Gew.% infiltriertes Harz aufweist, die Verstärkungsfaserfilamente elektrochemisch vorbehandelte Kohlenstofffilamente sind, wobei das infiltrierte Harz mindestens zwei Bisphenol A Epichlorhydrin - Harze H1 und H2 in einem Gewichtsverhältnis H1:H2 von 1,1 bis 1,4 enthält, wobei H1 einen Epoxidwert von 1850 bis 2400 mmol/kg und ein Molekulargewicht von 800 bis 1000 g/Mol aufweist und bei Raumtemperatur fest ist, und H2 einen Epoxidwert von 5000 bis 5600 mmol/kg und ein Molekulargewicht von < 700 g/Mol aufweist und bei Raumtemperatur flüssig ist, wobei das infiltrierte Harz zusätzlich ein drittes Harz H3 enthält, welches ein Bisphenol A Epichlorhydrin - Epoxidharz mit einem Epoxidwert von 450 bis 650 mmol/kg, einem Zahlenmittel des Molekulargewichts von 2800 bis 3000 g/Mol und einem Schmelzbereich von 110 bis 130 °C ist, und wobei das Garn, bezogen auf sein Gesamtgewicht, an H1 und H2 insgesamt 0,5 bis 1,7 Gew.-% und an H3 2,3 bis 5,5 Gew.-% aufweist.

2. Garn nach Anspruch 1, wobei das Garn bezogen auf sein Gesamtgewicht 3 bis 10 Gew.-% infiltriertes Harz aufweist.

3. Garn nach Anspruch 1 oder 2, dessen Verstärkungsfaserfilamente Kohlenstofffilamente sind, die aus Pech-, Polyacrylnitril- oder Viskosevorprodukten gewonnen wurden.

4. Verwendung des Garns nach einem oder mehreren der Ansprüche 1 bis 3 zur Herstellung eines Vorformlings.

5. Vorformling umfassend Garne nach einem oder mehreren der Ansprüche 1 bis 3, wobei die Garne an Stellen gegenseitiger Berührung über das infiltrierte Harz miteinander verbunden sind.

6. Vorformling nach Anspruch 5, **dadurch gekennzeichnet, dass** die Garne unidirektional angeordnet sind.

7. Vorformling nach Anspruch 5, **dadurch gekennzeichnet, dass** die Garne bi-, tri - oder multidirektional angeordnet sind.

8. Vorformling nach Anspruch 5, **dadurch gekennzeichnet, dass** die Garne als Kurzgarne vorliegen.

9. Verfahren zur Herstellung eines Vorformlings nach einem oder mehreren der Ansprüche 5 bis 8 umfassend die Schritte
a) Vorlegen eines Garnes nach einem oder mehreren der Ansprüche 1 bis 3
b) Anordnen des Garns in einer Konfiguration, welche der Konfiguration des gewünschten Vorformlings entspricht,
c) Erwärmen der in Schritt b) resultierenden Konfiguration bei einer Temperatur oberhalb des Schmelzpunktes des in das Garn infiltrierten Harzes, und
d) Abkühlen der in Schritt c) resultierenden Konfiguration zumindest unter den Schmelzpunkt des Harzes.

10. Verfahren nach Anspruch 9, **dadurch gekennzeichnet, dass** in Schritt c) die in Schritt b) resultierende Konfiguration gleichzeitig mit dem Erwärmen verpresst wird.

11. Verwendung des Vorformlings nach einem oder mehreren der Ansprüche 5 bis 8 zur Herstellung eines Composites umfassend eine Matrix, die ausgewählt ist aus einer der Gruppen der Polymere, Metalle, Keramiken, hydraulisch abbindenden Werkstoffen und Kohlenstoff.

12. Verwendung des nach dem Verfahren von Anspruch 9 oder 10 hergestellten Vorformlings bzw. des aus der Verwendung von Anspruch 4 resultierenden Vorformlings zur Herstellung eines Composites umfassend eine Matrix, die ausgewählt ist aus einer der Gruppen der Polymere, Metalle, Keramiken, hydraulisch abbindenden Werkstoffe und Kohlenstoff.

## Claims

1. Yarn consisting of reinforcing fibre filaments and a resin, infiltrated into the yarn, that can be repeatedly melted and solidified by cooling to room temperature, wherein the filaments of the yarn are at least partially bound to one another by the resin, wherein the yarn contains 2.5 to 25 wt.% of infiltrated resin relative to its total weight and wherein the reinforcing fibre filaments are electrochemically pre-treated carbon filaments, wherein the infiltrated resin contains at least two bisphenol A epichlorohydrin resins H1 and H2 in a weight ratio H1:H2 of 1.1 to 1.4, wherein H1 has an epoxy value of 1850 to 2400 mmol/kg and a molecular weight of 800 to 1000 g/mol, and is solid at room temperature, and H2 has an epoxy value of 5000 to 5600 mmol/kg and a molecular weight of < 700 g/mol, and is liquid at room temperature, wherein the infiltrated resin contains in addition a third resin H3 which is a bisphenol A epichlorohydrin epoxy resin with an epoxy value of 450 to 650 mmol/kg, a mean molecular weight of 2800 to 3000 g/mol, and a melting point range of 110 to 130°C, and wherein the yarn contains a total of 0.5 to 1.7 wt.% of H1 and H2 and 2.3 to 5.5 wt.% of H3 relative to its total weight.

2. Yarn according to Claim 1, wherein the yarn contains 3 to 10 wt.% of infiltrated resin relative to its total weight.

3. Yarn according to Claim 1 or 2 whose reinforcing fibre filaments are carbon fibre filaments that have been obtained from precursors of pitch, polyacrylonitrile, or viscose.

4. Use of the yarn according to one or more of Claims 1 to 3 to produce a preform.

5. Preform comprising yarns according to one or more of Claims 1 to 3, wherein the yarns are bound to one another by the infiltrated resin at points of mutual contact.

6. Preform according to Claim 5, **characterised in that** the yarns are positioned unidirectionally.

7. Preform according to Claim 5, **characterised in that** the yarns are positioned bi-, tri- or multidirectionally.

8. Preform according to Claim 5, **characterised in that** the yarns are present as short yarns.

9. Method for producing a preform according to one or more of Claims 5 to 8, comprising the following steps:
a) provision of a yarn according to one or more of Claims 1 to 3,
b) positioning of the yarn in a configuration corresponding to the configuration of the desired preform,
c) heating of the configuration resulting from step b) to a temperature above the melting point of the resin infiltrated in the yarn, and
d) cooling of the configuration resulting from step c) to at least below the melting point of the resin.

10. Method according to Claim 9, **characterised in that** the configuration resulting from step b) is compacted simultaneously with the heating in step c).

11. Use of the preform according to one or more of Claims 5 to 8 to produce a composite comprising a matrix selected from one of the groups of polymers, metals, ceramics, hydraulically setting materials, and carbon.

12. Use of the preform produced by the method of Claim 9 or 10, or resulting from the use of Claim 4, to produce a composite comprising a matrix selected from one of the groups of polymers, metals, ceramics, hydraulically setting materials, and carbon.

## Revendications

1. Filé constitué de filaments de fibres de renfort et d'une résine infiltrée dans le filé, que l'on peut à plusieurs reprises faire fondre et faire repasser à l'état solide en la faisant refroidir jusqu'à température ambiante, dans lequel :
- les filaments du filé sont au moins partiellement attachés par l'intermédiaire de la résine ;
- le filé contient de 2,5 à 25 % de résine infiltrée, en poids rapporté à son poids total ;
- les filaments de fibres de renfort sont des filaments de carbone qui ont subi un pré-traitement électrochimique ;
- la résine infiltrée comprend au moins deux résines H1 et H2 de bisphénol A et d'épichlorhydrine, en un rapport pondéral H1/H2 de 1,1 à 1,4, parmi lesquelles la résine H1, qui est solide à température ambiante, présente un indice d'époxyde de 1850 à 2400 mmol/kg et une masse molaire de 800 à 1000 g/mol, alors que la résine H2, qui est liquide à température ambiante, présente un indice d'époxyde de 5000 à 5600 mmol/kg et une masse molaire inférieure à 700 g/mol ;
- la résine infiltrée comprend en outre une troisième résine H3, qui est une résine époxyde de bisphénol A et d'épichlorhydrine présentant un indice d'époxyde de 450 à 650 mmol/kg et une masse molaire moyenne en nombre de 2800 à 3000 g/mol, ainsi qu'un intervalle de fusion de 110 à 130 °C ;
- et le filé contient, en poids rapporté à son poids total, en tout de 0,5 à 1,7 % de résines H1 et H2, et de 2,3 à 5,5 % de résine H3.

2. Filé conforme à la revendication 1, lequel filé contient de 3 à 10 % de résine infiltrée, en poids rapporté à son poids total.

3. Filé conforme à la revendication 1 ou 2, dont les filaments de fibres de renfort sont des filaments de carbone qui ont été obtenus à partir de précurseurs de type brai, polyacrylonitrile ou viscose.

4. Utilisation d'un filé conforme à l'une ou plusieurs des revendications 1 à 3 pour la fabrication d'une préforme.

5. Préforme comprenant des filés conformes à l'une ou plusieurs des revendications 1 à 3, dans laquelle les filés sont attachés les uns aux autres en des points de contact mutuel, par l'intermédiaire de la résine infiltrée.

6. Préforme conforme à la revendication 5, **caractérisée en ce que** les filés sont disposés selon une seule direction.

7. Préforme conforme à la revendication 5, **caractérisée en ce que** les filés sont disposés selon deux ou trois directions ou plus.

8. Préforme conforme à la revendication 5, **caractérisée en ce que** les filés se présentent sous la forme de filés courts.

9. Procédé de fabrication d'une préforme conforme à l'une ou plusieurs des revendications 5 à 8, lequel procédé comporte les étapes suivantes :
a) prendre un filé conforme à l'une ou plusieurs des revendications 1 à 3;
b) disposer le filé en une configuration qui correspond à la configuration de la préforme voulue ;
c) chauffer la configuration obtenue dans l'étape (b) à une température supérieure au point de fusion de la résine infiltrée dans le filé ;
d) et refroidir la configuration obtenue dans l'étape (c), au moins au-dessous du point de fusion de la résine.

10. Procédé conforme à la revendication 9, **caractérisé en ce que**, dans l'étape (c), la configuration obtenue dans l'étape (b) subit, en même temps que le chauffage, un moulage par compression.

11. Utilisation d'une préforme conforme à l'une ou plusieurs des revendications 5 à 8 pour la fabrication d'un composite comprenant une matrice qui est choisie dans l'un des ensembles suivants : polymères, métaux, céramiques, matériaux à prise hydraulique, et carbone.

12. Utilisation d'une préforme fabriquée selon un procédé conforme à la revendication 9 ou 10, ou d'une préforme résultant d'une utilisation conforme à la revendication 4, pour la fabrication d'un composite comprenant une matrice qui est choisie dans l'un des ensembles suivants : polymères, métaux, céramiques, matériaux à prise hydraulique, et carbone.
